# EUROPÄISCHE PATENTSCHRIFT

(11) **EP 1 739 022 B1**
(45) Veröffentlichungstag und Bekanntmachung des Hinweises auf die Patenterteilung: **25.06.2008**
(21) Anmeldenummer: 05012512.9
(22) Anmeldetag: 10.06.2005
(51) Int. Cl.: B65D 19/12, F16C 11/04, F16C 11/10

(54) **Gelenk für die Pfosten eines Transport- und Lagergestells**
Joint for the posts of a transport and a storage rack
Joint pour les poteaux d'un chassis de transport et stockage

(43) Veröffentlichungstag der Anmeldung: 03.01.2007
(73) Patentinhaber: Guss Transfer GmbH & Co. KG Woeste Service und Technik, 42551 Velbert (DE)
(72) Erfinder: Klinger, Bodo, 40764 Langenfeld (DE); Olczok, Eugenius, 47441 Moers (DE)
(74) Vertreter: Stenger, Watzke & Ring

(56) Entgegenhaltungen:
- EP-A- 1 101 706
- DE-U1- 29 618 314
- DE-U1- 29 712 130
- US-A- 3 941 271

## Beschreibung

Die vorliegende Erfindung betrifft ein Gelenk für die Pfosten eines Transport- und Lagergestells mit zwei Bauteilen, die aus einer festgelegten Endstellung in eine Schwenkstellung überführbar sind, in der sie um einen begrenzten Winkel zueinander verschwenkbar sind.

Derartige Gelenke sind bereits bekannt. Sie werden beispielsweise für Spezialtransportgestelle verwendet, die zum Transport von Bauteilen aus industrieller Fertigung dienen, die wegen ihrer Formgebung oder Empfindlichkeit mit den üblichen Standardverpackungen wie Kisten, Lattenverschlägen oder ähnlichem nur mit hohem Aufwand transportiert werden können. Beispiele solcher Bauteile aus der Automobilindustrie sind Motoren, Kotflügel, Sitze, montagefertige Achsen oder dergleichen.

Derartige Transportgestelle sind über viele Jahre im Dauereinsatz und müssen entsprechend robust aufgebaut sein. Bei ihrem Einsatz werden sie zunächst mit entsprechenden Bauteilen beladen und zwecks Lagerung zu Türmen bis 10 m Höhe aufgestapelt, wodurch sich für das zu unterst angeordnete Transportgestell eines solchen Turms eine Gesamtlast von mehreren Tonnen ergeben kann. Anschließend werden die Transportgestelle mit einem geeigneten Verkehrsmittel, wie beispielsweise mit einem LKW, der Bahn oder einem Schiff transportiert, wobei bei einem solchen Transport üblicherweise ein Stapelverbund von 2 oder 3 übereinander angeordneten Transportgestellen gebildet wird. Am Zielort werden die Transportgestelle entladen und entleert.

Bekannte Transportgestelle bestehen aus einem rechteckigen Boden und vier Eckpfosten, von denen in der Regel jeweils zwei Eckpfosten über einen Querträger miteinander verbunden sind. Um im leeren Zustand der Transportgestelle den Platzbedarf der hoch aufragenden Eckpfosten zu reduzieren, sind in den Pfosten Gelenke angeordnet, über die die mittels des Querträgers miteinander verbundenen Pfosten zur Mitte des Transportgestells umgeklappt werden können. Eckpfosten, die nicht über einen Querträger miteinander verbunden sind, werden entsprechend einzeln umgeklappt.

Solche Gelenke müssen neben den statischen Lasten, die während ihrer Benutzung auf sie wirken, auch enorme dynamische Belastungen aufnehmen, welche sich im aufgestapelten Zustand während des Transportes und dem rauhen Umgang mit den Gestellen beim Stapeln im Lager ergeben.

Ein bekanntes Gelenk wird durch zwei zapfenartig ineinander steckbare und mit den Pfosten des Transport- und Lagergestells verbindbare Rechteck-Hohlprofile gebildet. Um ein Verschwenken der beiden ineinander steckbaren Hohlprofile zueinander zu ermöglichen, sind am oberen Profil der beiden Profilstücke ein Steg mit angebrachtem Lagerelement und am unteren Profil eine Aufnahmebuchse zur Aufnahme des Steges sowie des Lagerelementes so angeordnet, daß nach dem Auseinanderheben der beiden zapfenartig ineinander gesteckten Rechteck-Hohlprofile diese beiden Profilteile und das in dem Steg angeordnete Lagerelement zueinander verschwenkt werden können.

Diese bekannte Konstruktion erlaubt zwar ein Verschwenken der Pfostenteile eines Transportgestells zueinander, um die Bauhöhe eines solchen Transport- und Lagergestells im leeren Zustand zu reduzieren, jedoch ist einerseits der konstruktive Aufwand der auf einer Außenseite der Rechteck-Hohlprofile angeschweißten Elemente sehr hoch und andererseits bedarf es einer großen Kraftanstrengung, um die über den Querholm miteinander verbundenen Pfosten an einer Seite des Transport- und Lagergestells umzuklappen, da vor dem Umklappen die zapfenartig ineinander gesteckten Pfostenteile aus dem Eingriff miteinander in Längsrichtung der Pfosten angehoben werden müssen. Da die Pfosten insgesamt sehr stabil ausgebildet sind, um die hohen Lasten aufzunehmen, weisen sie meist ein hohes Gewicht auf, so daß ein häufiges Anheben der Pfosten in Längsrichtung beim Menschen zu Gesundheitsschäden führen kann. Ferner neigt die bekannte Konstruktion zum Verkanten, weshalb sie häufig nachgefettet werden muß, um ein ordnungsgemäßes Anheben zu ermöglichen. Der Wartungsaufwand ist entsprechend hoch.

Bei einem weiteren bekannten Gelenk bestehen die Bauteile aus einem Basisteil und einem am Basisteil gelagerten Schwenkteil, das um einen Lagerbolzen verschwenkbar ist. Bei diesem Gelenk ist ein Riegelelement vorgesehen, welches das Schwenkteil in der verriegelten Endstellung innerhalb des Basisteils arretiert. Auf diese Weise wird ein Gelenk geschaffen, dessen Verschwenkbarkeit nur durch das Riegelelement blockiert wird, so daß das Gelenk nach dem Entfernen des sperrenden Riegelelementes ohne zusätzlichen Kraftaufwand einfach und sicher verschwenkbar ist. Dies bedeutet aber auch, daß die Arretierungen der Klappgelenke die enormen Belastungen allein aufnehmen müssen. Durch die Belastungen schlagen die Verriegelungen mit der Zeit aus und können bei außerordentlichen Belastungen ganz versagen, was zur Beschädigung der transportierten Bauteile aber auch zu schwerwiegenden Personenschäden führen kann.

Ein Beispiel von einem bekannten Gelenk wird im EP 1 101 706 A1 offenbart.

Es ist eine A u f g a b e der vorliegenden Erfindung, ein Gelenk der eingangs genannten Art zu schaffen, das einfach und kostengünstig herzustellen ist und darüber hinaus ein Verschwenken mit nur geringem Kraftaufwand ermöglicht, ohne daß die Gefahr eines Verkantens besteht oder daß sich das Gelenk aus seiner festgelegten bzw. arretierten Endstellung ungewollt löst.

Zur L ö s u n g dieser Aufgabe schafft die vorliegende Erfindung ein Gelenk für die Pfosten eines Transport- und Lagergestells nach Anspruch 1 sowie ein Transport- und Lagergestell nach Anspruch 7.

Das erfindungsgemäße Gelenk für die Pfosten eines Transport- und Lagergestells umfaßt zwei Bauteile, die in einem Betriebszustand des Gelenks aus einer festgelegten Endstellung in eine Schwenkstellung überführbar sind, also in eine Stellung, in der sie um einen begrenzten Winkel zueinander verschwenkbar sind. Eines der beiden Bauteile weist wenigstens eine Aufnahme zur Festlegung des anderen Bauteils auf. Diese Aufnahme umfaßt eine im Betriebszustand des Gelenks zur Vertikalen geneigte Führungsfläche, in der das andere Bauteil geführt ist. Um die beiden Bauteile aus der festgelegten Endstellung in die Schwenkstellung zu überführen, werden die beiden Bauteile entlang der Führungsfläche relativ zueinander bewegt, bis die Schwenkstellung des Gelenks erreicht und ein Verschwenken der Bauteile zueinander möglich ist.

Gemäß der vorliegenden Erfindung kann eines der Gelenkbauteile derart in der Aufnahme des anderen Bauteils versenkt und auf diese Weise festgelegt werden, daß durch das Eigengewicht des oberen Bauteils eine festgelegte Endstellung erzeugt wird. Je stärker das erfindungsgemäße Gelenk in der festgelegten Endstellung durch weiteres Gewicht belastet wird, wie beispielsweise durch Aufstapelung zusätzlicher Transportgestelle, desto schlüssiger und sicherer verharrt das Gelenk in seiner festgelegten Endstellung.

Soll das erfindungsgemäße Gelenk aus der festgelegten Endstellung in die Schwenkstellung überführt werden, so läßt sich das erfindungsgemäße Gelenk durch eine relativ geringe Schubkraft, die auf das obere Gelenkbauteil in Richtung der geneigten Führungsfläche der Aufnahme ausgeübt wird, leichter und rückenschonender entriegeln, da von dem Personal aufgrund der Neigung keine reine vertikale Aufwärtskraft sondern eine kombinierte Vertikal- und Horizontalkraft aufgebracht werden muß. Ein Verkanten der beiden Bauteile ist dabei nicht zu befürchten.

Das erfindungsgemäße Gelenk verbindet die Vorteile der beiden zuvor genannten bekannten Gelenke, nämlich das Schwenken nach Entriegelung ohne weiteren besonderen Kraftaufwand und die dauerhaft präzise Verriegelung durch die Festlegung des einen Bauteils in der Aufnahme des anderen Bauteils.

Vorzugsweise beträgt die Neigung der Führungsfläche zur Vertikalen zwischen 30° und 60°, besser noch zwischen 40° und 50°. Bei diesen Neigungen ist eine sichere Verriegelung im Gebrauchszustand des Gelenks sowie ein einfaches Entriegeln bei entleertem Transportgestell gewährleistet.

Vorteilhaft umfaßt das in der Aufnahme des einen Bauteils festlegbare andere Bauteil einen Vorsprung, der im festgelegten Zustand in die Aufnahme greift und über die Führungsfläche der Aufnahme führbar ist. Dabei sind der Vorsprung und die Aussparung bevorzugt derart ausgebildet, daß der Vorsprung im festgelegten Zustand im wesentlichen formschlüssig in der Aussparung versenkt ist. Auf diese Weise wird eine stabile Konstruktion erzielt. Ferner wird die Sicherheit bezüglich eines ungewollten Lösens der Bauteile aus der festgelegten Stellung erhöht.

Ferner ist es vorteilhaft, daß noch eine zusätzliche Verriegelung vorgesehen ist, die eine Schwenkbewegung der Bauteile in der festgelegten Stellung sperrt. Gegenüber dem Stand der Technik wird eine solche Verriegelung nur geringfügig belastet und weist eine entsprechend hohe Lebensdauer auf, da ein Großteil der Last durch die Führungsfläche der erfindungsgemäßen Aufnahme aufgenommen wird, wenn das Gelenk seitliche Kräfte erfährt.

Nachfolgend wird die vorliegende Erfindung anhand verschiedener Ausführungsbeispiele unter Bezugnahme auf die Zeichnung genauer beschrieben. Darin ist:
- Fig. 1:: eine Vorderansicht eines ersten Bauteils einer ersten beispielhaften Ausführungsform des erfindungsgemäßen Gelenks;
- Fig. 2:: eine Seitenansicht des in Fig. 1 dargestellten ersten Bauteils;
- Fig. 3:: eine teilweise geschnittene Vorderansicht eines zweiten Bauteils der ersten beispielhaften Ausführungsform des erfindungsgemäßen Gelenks;
- Fig. 4:: eine Querschnittansicht des in Fig. 3 dargestellten zweiten Bauteils entlang der Linie IV-IV in Fig. 3;
- Fig. 5:: eine Vorderansicht der ersten beispielhaften Ausführungsform des erfindungsgemäßen Gelenks;
- Fig. 6:: eine Seitenansicht der in Fig. 5 dargestellten Ausführungsform, anhand der die Schwenkbewegung des ersten und zweiten Bauteils zueinander schematisch dargestellt ist;
- Fig. 7:: eine teilweise geschnittene Vorderansicht einer zweiten beispielhaften Ausführungsform des erfindungsgemäßen Gelenks und
- Fig. 8:: eine Seitenansicht der in Fig. 7 dargestellten Ausführungsform.

Gleiche Bezugsziffern beziehen sich nachfolgend auf gleichartige Bauteile.

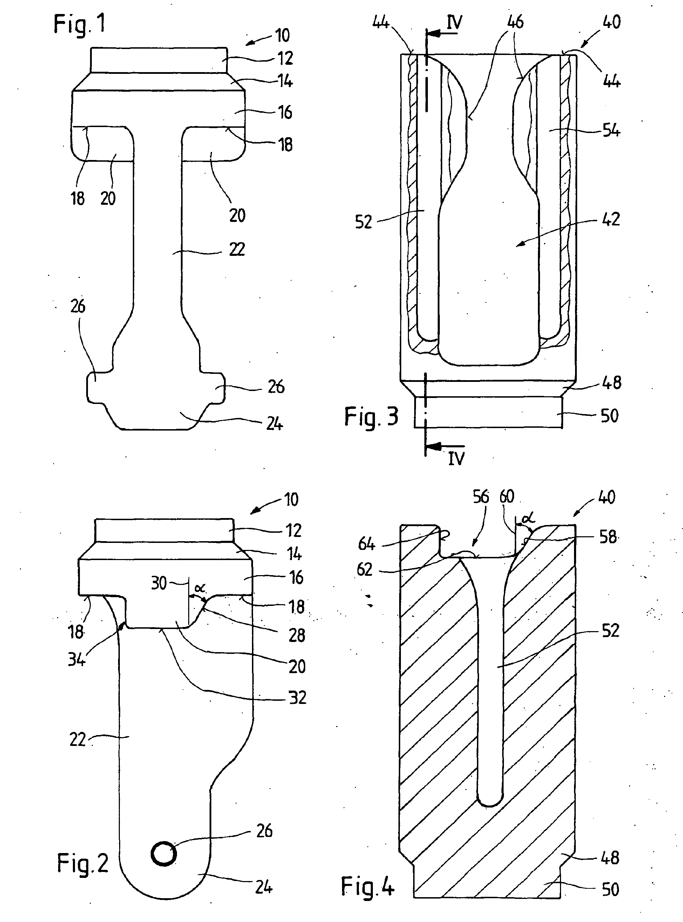

Fig. 1 zeigt eine Vorderansicht eines ersten Bauteils 10 gemäß einer ersten Ausführungsform des erfindungsgemäßen Gelenks. Das erste Bauteil 10 ist einteilig als Gußteil ausgebildet und umfaßt der Reihe nach, in Fig. 1 von oben nach unten betrachtet, einen hohlen Stützabschnitt 12 mit rechteckigem Querschnitt sowie einen sich an diesen anschließenden hohlen, sich konisch erweiternden Übergangsabschnitt 14, der ebenfalls rechteckige Querschnittformen aufweist, wobei diese beiden Abschnitte zur Aufnahme und zum Anschweißen eines nicht dargestellten Pfostenteils eines Transport- und Lagergestells dienen, einen im wesentlichen massiven Abschnitt 16 mit Auflageflächen 18, die in einer festgelegten Endstellung des zusammengesetzten Gelenks auf entsprechenden Auflageflächen eines in den Figuren 3 und 4 dargestellten zweiten Bauteils aufliegen, Vorsprünge 20, die in entsprechende Aufnahmen des zweiten Bauteils eingreifen und in diesen versenkbar sind, einen stegförmigen Abschnitt 22 mit im wesentlichen rechteckigem Querschnitt und einen Endabschnitt 24, der eine größere Querschnittfläche als der steckförmige Abschnitt 22 aufweist und an dem beidseitig im wesentlichen zylindrische Elemente 26 vorstehen.

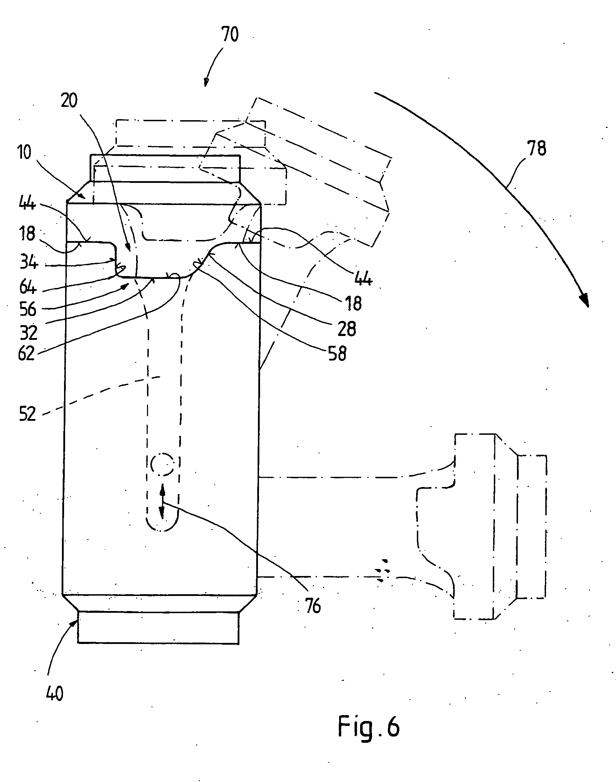

Fig. 2 ist eine Seitenansicht des in Fig. 1 dargestellten ersten Bauteils 10, welche die Ausbildung eines der Vorsprünge 20 genauer zeigt. Der Vorsprung 20 umfaßt eine Führungsfläche 28, die gegenüber einer Vertikalen 30 um einen Winkel α geneigt ist, der vorliegend etwa 45° beträgt, und zwei sich an die Führungsfläche 28 anschließende Flächen 32 und 34. Die genauere Funktion der Vorsprünge 20 wird unter Bezugnahme auf die Figur 6 noch genauer beschrieben.

Fig. 3 ist eine teilweise geschnittene Vorderansicht eines zweiten Bauteils 40 der ersten Ausführungsform des erfindungsgemäßen Gelenks. Das zweite Bauteil 40 ist einteilig als Gußteil ausgebildet und umfaßt der Reihe nach, in Fig. 3 von oben nach unten betrachtet, einen quadratischen, hohlen ersten Abschnitt 42 zur Aufnahme des stegförmigen Abschnitts 22 und des Endabschnittes 24 des ersten Bauteils 10, wobei der erste Abschnitt eine aufwärts nach außen weisende, umlaufende Auflagefläche 44 zur Aufnahme der Auflageflächen 18 des ersten Bauteils und eine radial nach innen weisende, umlaufende Anlagefläche 46 zum Stützen des stegförmigen Abschnittes 22 des ersten Bauteils 10 umfaßt, sowie einen Übergangsabschnitt 48 und ein Stützabschnitt 50, die den entsprechenden Abschnitten 12 und 14 des ersten Bauteils entsprechen und ebenfalls zur Aufnahme und zum Anschweißen von Pfostenteilen eines Transport- und Lagergestells dienen. Der erste Abschnitt 42 des zweiten Bauteils 40 weist ferner Aussparungen 52 und 54 auf, die zur Aufnahme der zylindrischen Vorsprünge 26 des ersten Bauteils 10 dienen.

Fig. 4 ist eine seitliche Querschnittansicht des zweiten Bauteils 40 entlang der Linie IV-IV in Fig. 3. Die Aussparung 52 ebenso wie die nicht dargestellte Aussparung 54 weisen die Form einer Längsnut auf. Das zweite Bauteil 40 umfaßt ferner beidseitig Aufnahmen 56, die zur Aufnahme der Vorsprünge 20 des ersten Bauteils 10 dienen und entsprechend ausgebildet sind. Ebenso wie die Vorsprünge 20 des ersten Bauteils 10 umfassen die Aufnahmen 56 eine Führungsfläche 58, die gegenüber der Vertikalen 60 um einen Winkel *α* von etwa 45° geneigt ist, und sich an die Führungsfläche 58 anschließende Flächen 62 und 64, die zur Aufnahme der entsprechenden Flächen 32 und 34 des Vorsprungs 20 des ersten Bauteils 10 dienen.

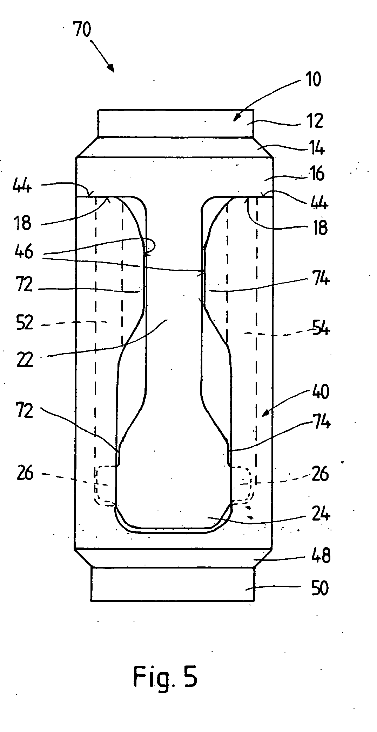

Fig. 5 zeigt eine Vorderansicht eines Gelenks 70 gemäß der ersten Ausführungsform der vorliegenden Erfindung, bei dem das in den Figuren 1 und 2 dargestellte erste Bauteil 10 in das in den Figuren 3 und 4 dargestellte zweite Bauteil 40 eingesetzt ist. Die zylindrischen Elemente 26 des ersten Bauteils 10 sind von oben durch die Aussparungen 52 und 54 des zweiten Bauteils eingesetzt. In diesem Zustand sind die mit den Bezugsziffern 72 und 74 bezeichneten Seitenwandabschnitte des ersten Bauteils 10 nahe an den mit der Bezugsziffer 46 bezeichneten Anlageflächen des zweiten Bauteils 40 angeordnet und werden bei einer seitlichen Verschiebung des ersten Bauteils 10 zum zweiten Bauteil 40 von diesen gestützt. Auf diese Weise wird das Spiel zwischen den Bauteilen 10 und 40 in der festgelegten Endstellung reduziert. Die Auflageflächen 18 des ersten Bauteils 10 liegen auf den Auflageflächen 44 des zweiten Bauteils 40 auf. In der in Fig. 5 dargestellten festgelegten Endstellung des Gelenkes 70 ist das erste Bauteil 10 sicher in dem zweiten Bauteil 40 gehalten, was unter Bezugnahme auf Fig. 6 noch genauer beschrieben ist.

Fig. 6 ist eine Seitenansicht des in Fig. 5 dargestellten Gelenkes 70. Der Vorsprung 20 des ersten Bauteils 10 ist in der Aufnahme 56 des zweiten Bauteils 40 versenkt, wobei die Führungsfläche 28 und die Flächen 32 und 34 des Vorsprungs 20 des ersten Bauteils 10 im wesentlichen an der Führungsfläche 58 und den Flächen 62 und 64 der Aufnahme 56 des zweiten Bauteils 40 anliegen. Durch das vertikal abwärts wirkende Eigengewicht des ersten Bauteils 10 sowie durch das im wesentlichen formschüssige Abtauchen des Vorsprungs 20 des ersten Bauteils 10 in die Aufnahme 56 des zweiten Bauteils 40 ist das erste Bauteil 10 in der in Fig. 6 dargestellten festgelegten Endstellung in dem zweiten Bauteil 40 arretiert, wodurch eine ungewollte Schwenkbewegung zwischen den Bauteilen 10 und 40 sicher verhindert wird. Wenn mehrere mit zu transportierenden oder zu lagernden Produkten gefüllte Transportgestelle übereinander gestapelt sind, erfolgt eine zusätzliche Arretierung der entsprechenden Gelenke 70 in ihrer festgelegten Endstellung durch das Eigengewicht der oberhalb der Gelenke 70 eines Transportgestells angeordneten Transportgestelle, das die jeweiligen Vorsprünge 20 der ersten Bauteile 10 fester in die entsprechenden Aufnahmen 56 der zweiten Bauteile 40 drückt. Zur Erleichterung eines Stapelns der Transportgestelle in der geschwenkten Endstellung der Gelenke 70 umfaßt der obere Bereich des Bauteils 40 eine Stapelaufnahme zur Aufnahme eines entsprechenden Stapeldorns eines weiteren Transportgestells, wobei die Stapelaufnahme in den Figuren 1 bis 8 nicht näher dargestellt ist.

Soll nun das erste Bauteil 10 relativ zum zweiten Bauteil 40 geschwenkt werden, so wird das erste Bauteil 10 entlang der Führungsfläche 58 der Aufnahme 56 des zweiten Bauteils 40 aufwärts gedrückt und anschließend der Vorsprung 20 nach rechts über die Auflagefläche 44 des zweiten Bauteils 40 geschoben, wobei sich die zylindrischen Elemente 26 des ersten Bauteils 10 in Richtung des Pfeils 76 bewegen. Sobald kein Kontakt mehr zwischen dem Vorsprung 20 des ersten Bauteils 10 und der Auflagefläche 44 des zweiten Bauteils 40 besteht, kann das erste Bauteil 10 frei in Richtung des Pfeils 78 geschwenkt werden.

Dabei ist das Bewegen des Vorsprungs 20 des ersten Bauteils 10 entlang der Führungsfläche 58 der Aufnahme 56 des zweiten Bauteils 40 wesentlich leichter als ein vertikales Anheben des ersten Bauteils 10. Durch Vorsehen der Führungsfläche 58 der Aufnahme 56 können Kraftaufwand und körperliche Belastung des Bedienpersonals erheblich reduziert werden.

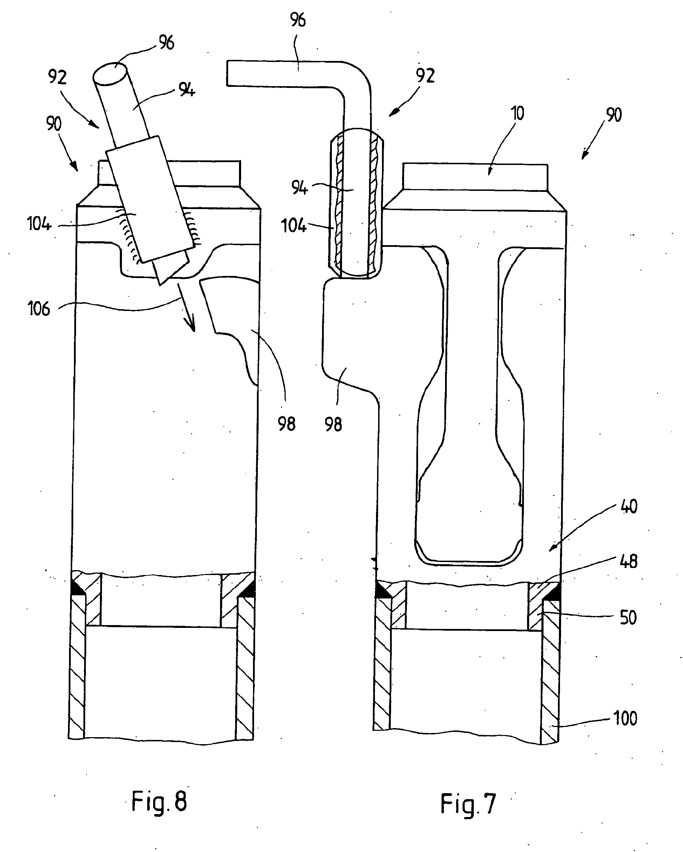

Fig. 7 zeigt eine Vorderansicht einer zweiten Ausführungsform eines erfindungsgemäßen Gelenkes 90. Das Gelenk 90 entspricht im wesentlichen dem in Fig. 5 dargestellten Gelenk 70, wobei bei dem Gelenk 90 zusätzlich eine Verriegelung 92 vorgesehen ist. Diese Verriegelung 92 umfaßt einen Riegel 94, einen Handgriff 96, einen Anschlag 98 und einen Riegelhalter 104. Die Funktionsweise der Verriegelung 92 wird unter Bezugnahme auf Fig. 8 noch genauer beschrieben. Ferner ist im Unterschied zu Fig. 5 an den Übergangsabschnitt 48 des zweiten Bauteils 40 ein quadratisches Hohlrohr 100 angeschweißt. Auf diese Weise können Pfostenteile eines Transport- und/oder Lagergestells mit dem Gelenk 90 verschweißt werden.

Fig. 8 zeigt eine Seitenansicht des in Fig. 7 dargestellten Gelenks 90. Der Riegel 94 der Verriegelung 92 ist in einem Riegelhalter 104 geführt, der mit dem ersten Bauteil 10 verschweißt ist. Durch Ergreifen des Handgriffs 96 kann der Riegel 94 in Richtung des Pfeils 106 abwärts bewegt werden, so daß der Riegel 94 zur Anlage mit dem Anschlag 98 kommt, wodurch eine Schwenkbewegung des ersten Bauteils 10 gegenüber dem zweiten Bauteil 40 wirksam verhindert wird.

Die in den Figuren 7 und 8 dargestellte Verriegelung 92 dient als zusätzliche Sicherung. Im Gegensatz zum Stand der Technik hat die Verriegelung 92 lediglich noch eine Restlast aufzunehmen, soweit sich je nach Neigung der Führungsfläche 58 der Aufnahme 56 des zweiten Bauteils 40 noch eine Schubwirkung in Richtung der Schwenkstellung des Gelenkes 90 ergibt. Aufgrund der geringen auf die Verriegelung 92 wirkenden Restlast weist die Verriegelung 92 eine hohe Lebensdauer auf, weshalb ein Versagen dieser zusätzlichen Sicherung nicht zu befürchten ist.

Es sollte klar sein, daß die in den Figuren dargestellten und entsprechend beschriebenen Ausführungsbeispiele des erfindungsgemäßen Gelenks nicht einschränkend sind und daß Modifikationen und Änderungen vorgenommen werden können, ohne den durch die beiliegenden Ansprüche definierten Schutzbereich der vorliegenden Erfindung zu verlassen.

### Bezugszeichenliste

- 10: erstes Bauteil
- 12: Stützabschnitt
- 14: Übergangsabschnitt
- 16: Abschnitt
- 18: Auflageflächen
- 20: Vorsprünge
- 22: stegförmiger Abschnitt
- 24: Endabschnitt
- 26: zylindrische Elemente
- 28: Führungsfläche
- 30: Vertikale
- 32: Fläche
- 34: Fläche
- 40: zweites Bauteil
- 42: erster Abschnitt
- 44: Auflagefläche
- 46: Anlagefläche
- 48: Übergangsabschnitt
- 50: Stützabschnitt
- 52: Aussparung
- 54: Aussparung
- 56: Aufnahme
- 58: Führungsfläche
- 60: Vertikale
- 62: Fläche
- 64: Fläche
- 70: Gelenk
- 72: Seitenwandabschnitt
- 74: Seitenwandabschnitt
- 76: Pfeil
- 78: Pfeil
- 90: Gelenk
- 92: Verriegelung
- 94: Riegel
- 96: Handgriff
- 98: Anschlag
- 100: Hohlrohr
- 104: Riegelhalter
- 106: Pfeil

## Patentansprüche

1. Gelenk für die Pfosten eines Transport- und Lagergestells mit zwei Bauteilen (10, 40), die aus einer festgelegten Endstellung in eine Schwenkstellung überführbar sind, in der sie um einen begrenzten Winkel zueinander verschwenkbar sind, wobei eines der Bauteile (40) eine Aufnahme (56) zur Festlegung des anderen Bauteils (10) mit mindestens einer im Betriebszustand des Gelenks zur Vertikalen (60) geneigten Führungsfläche (58) aufweist, entlang der das andere Bauteil (10) führbar ist, und die Bauteile (10, 40) aufgrund einer relativ geringen Schubkraft, die auf das obere Gelenkbauteil in Richtung der geneigten Führungsfläche der Aufnahme ausgeübt wird, durch eine Relativbewegung der Bauteile (10, 40) entlang der Führungsfläche (58) aus der festgelegten Endstellung in die Schwenkstellung überführbar sind.

2. Gelenk nach Anspruch 1, wobei die Neigung der Führungsfläche zur Vertikalen (60) zwischen 30° und 60° beträgt.

3. Gelenk nach einem der vorhergehenden Ansprüche, wobei die Neigung der Führungsfläche zur Vertikalen (60) zwischen 40° und 50° beträgt.

4. Gelenk nach einem der vorhergehenden Ansprüche, wobei das in der Aufnahme (56) des einen Bauteils (40) festlegbare andere Bauteil (10) einen Vorsprung (20) aufweist, der im festgelegten Zustand in die Aufnahme (56) greift und über die Führungsfläche (58) der Aufnahme (56) führbar ist.

5. Gelenk nach Anspruch 4, wobei der Vorsprung (20) und die Aufnahme (56) derart ausgebildet sind, daß der Vorsprung (20) im festgelegten Zustand im wesentlichen formschlüssig in der Aufnahme (56) versenkt ist.

6. Gelenk nach einem der vorhergehenden Ansprüche, wobei eine zusätzliche Verriegelung (92) vorgesehen ist, die eine Schwenkbewegung der Bauteile (10, 40) in der festgelegten Stellung sperrt.

7. Transport- und Lagergestell mit Gelenken nach einem der vorhergehenden Ansprüche.

## Claims

1. Joint for the posts of a transport and storage rack including two components (10, 40) which may be moved from a fixed end position to a pivoting position in which they can be pivoted relative to each other through a limited angle, wherein one of the components (40) includes a seat (56) for fixing the other component (10), said seat having at least one guide surface (58) which in the operative state of the joint is inclined towards the vertical (60) and along which guide surface the other component (10) is guidable, and wherein the components (10, 40) may be moved along said guide surface (58) from the fixed end position to the pivoting position by a relative movement of the components (10, 40) along the guide surface, due to a relatively small thrust which is exerted on the upper joint component in the direction of the inclined guide surface of the seat.

2. Joint according to claim 1, wherein the inclination of the guide surface with respect to vertical (60) is between 30° and 60°.

3. Joint according to one of the preceding claims, wherein the inclination of the guide surface with respect to the vertical (60) is between 40° and 60°.

4. Joint according to one of the preceding claims, wherein said other component (10) which is fixable in the seat (56) of said one component (40) includes a protrusion (20) which in the fixed state engages in the seat (56) and can be guided over the guide surface (58) of the seat (56).

5. Joint according to claim 4, wherein the protrusion (20) and the seat (56) are formed in a manner such that the protrusion (20) in the fixed state is plunged in the seat (56) in a substantially form-fit fashion.

6. Joint according to one of the preceding claims, wherein an additional locking (92) is provided which locks the components (10, 40) against a pivoting movement in the fixed position.

7. Transport and storage rack including joints according to one of the preceding claims.

## Revendications

1. Joint pour les poteaux d'un châssis de transport et stockage avec deux composants (10, 40) qui peuvent passer d'une position finale fixée à une position de pivotement dans laquelle ils sont pivotables l'un par rapport à l'autre autour d'un angle limité, l'un des composants (40) présentant un logement (56) pour fixer l'autre composant (10) avec au moins une surface de guidage (58) inclinée par rapport à la verticale (60), lorsque le joint est à l'état de fonctionnement, surface le long de laquelle l'autre composant (10) peut être guidé, et les composants (10, 40) pouvant passer, en raison d'une force de poussée relativement faible qui est exercée sur le composant de joint supérieur en direction de la surface de guidage inclinée du logement, de la position finale fixée à la position de pivotement par un mouvement relatif des composants (10, 40) le long de la surface de guidage (58).

2. Joint selon la revendication 1, l'inclinaison de la surface de guidage par rapport à la verticale (60) étant entre 30° et 60°.

3. Joint selon l'une des revendications précédentes, l'inclinaison de la surface de guidage par rapport à la verticale (60) étant entre 40° et 50°.

4. Joint selon l'une des revendications précédentes, l'autre composant (10) pouvant être fixé dans le logement (56) de l'un des composants (40) présentant une saillie (20) qui s'engrène à l'état fixé dans le logement (56) et qui peut être guidée sur la surface de guidage (58) du logement (56).

5. Joint selon la revendication 4, la saillie (20) et le logement (56) étant configurés tels que la saillie (20) à l'état fixé est enfoncée substantiellement de manière crabotée dans le logement (56).

6. Joint selon l'une des revendications précédentes, un verrouillage supplémentaire (92) étant prévu qui bloque un mouvement de pivotement des composants (10, 40) dans la position fixée.

7. Châssis de transport et de stockage avec des joints selon l'une des revendications précédentes.
